# EUROPEAN PATENT SPECIFICATION

(11) **EP 2 632 064 B1**
(45) Date of publication and mention of the grant of the patent: **10.06.2015**
(21) Application number: 11837561.7
(22) Date of filing: 31.10.2011
(51) Int. Cl.: H04B 17/00, H04L 25/03, H04L 27/00, H04L 27/20, H04L 27/227, H04L 27/22

(54) **METHOD, DEVICE AND SYSTEM FOR FREQUENCY OFFSET DETECTION OF TERMINAL**
VERFAHREN, VORRICHTUNG UND SYSTEM ZUR ERKENNUNG DES FREQUENZVERSATZES EINES ENDGERÄTS
PROCÉDÉ, DISPOSITIF ET SYSTÈME DE DÉTECTION DE DÉCALAGE DE FRÉQUENCE D'UN TERMINAL

(30) Priority: 01.11.2010 CN 201010532088
(43) Date of publication of application: 28.08.2013
(73) Proprietor: Huawei Technologies Co., Ltd., Longgang District Shenzhen, Guangdong 518129 (CN)
(72) Inventor: GUO, Hongwei, Shenzhen Guangdong 518129 (CN); ZHANG, Xianxiao, Shenzhen Guangdong 518129 (CN)
(74) Representative: Lord, Michael
(86) International application number: PCT/CN2011/081583
(87) International publication number: WO 2012/059035

(56) References cited:
- CN-A- 1 556 589
- CN-A- 101 822 029
- CN-A- 102 006 128
- US-A1- 2009 067 517
- RAIMUND MEYER ET AL: "Efficient receivers for GSM MUROS downlink transmission", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 2399-2403, XP031659888, ISBN: 978-1-4244-5122-7
- CAMPANELLA S J ET AL: "Network control for multibeam TDMA and SS/TDMA", IEEE JOURNAL ON SELECTED AREAS IN COMMUNICATIONS, IEEE SERVICE CENTER, PISCATAWAY, US, vol. SAC-01, no. 1, 1 January 1983 (1983-01-01), pages 174-187, XP002114629, ISSN: 0733-8716, DOI: 10.1109/JSAC.1983.1145906
- HAIPENG LEI ET AL: "Subchannel interference cancellation for GERAN/VAMOS systems", COMMUNICATIONS TECHNOLOGY AND APPLICATIONS, 2009. ICCTA '09. IEEE INTERNATIONAL CONFERENCE ON, IEEE, PISCATAWAY, NJ, USA, 16 October 2009 (2009-10-16), pages 157-161, XP031577575, ISBN: 978-1-4244-4816-6

## Description

### FIELD OF THE INVENTION

The present invention relates to the field of wireless communications technologies, and in particular, to a method, an apparatus, and a system for detecting terminal frequency offset.

### BACKGROUND OF THE INVENTION

The VAMOS (Voice services over Adaptive Multi-user Channels on One Slot, voice services over adaptive multi-user channels on one slot) technology is a standard global system for mobile communications (Global System for Mobile Communications, GSM for short) technology for improving voice service capacity. In the VAMOS technology, voice services corresponding to two voice users can be multiplexed on a half-rate or full-rate.radio channel.

When existing GSM terminals perform voice services, voice services of two GSM terminals in a same cell can be multiplexed to a same service channel by using the VAMOS technology, thereby improving GSM capacity.

When a GSM terminal receives a signal of a voice service that is multiplexed by using a downlink AQPSK modulation technology in the VAMOS, a signal of a voice service of the GSM terminal is interfered with a signal of a multiplexed voice service of another GSM terminal. A downlink automatic frequency correction (Automatic Frequency Correction, AFC for short) function of a certain type of a GSM terminal may be abnormal especially when an interfering signal is stronger than a valid voice service signal. As a result, downlink frequency offset is abnormal, resulting in a problem of voice quality degrading or a loss of connection. However, the prior art lacks the means for detecting a terminal on which a frequency offset abnormality may occur during VAMOS multiplexing.

Raimund Meyer and others, 'Efficient Receivers for GSM MUROS Downlink Transmission' in 2009 IEEE 20th Personal, Indoor and Mobile Radio Communications Symposium 2399-2403 describes algorithms for channel estimation and detection for a GSM MUROS downlink.

S J Campanella and Roger J Colby, 'Network Control for Multibeam TDMA and SS/TDMA' (1983) 1(1) IEEE Journal on Selected Areas in Communications 174-187 describes a control method in a TDMA system for synchronous burst time plan changes through a network.

### SUMMARY OF THE INVENTION

Embodiments of the present invention provide a method, an apparatus, and a system for detecting terminal frequency offset, so as to detect whether a frequency offset abnormality may occur when a terminal performs VAMOS multiplexing.

The embodiments of the present invention may be specifically implemented by using the following technical solutions:

According to one aspect, a method for detecting terminal frequency offset is provided, including: modulating, by using an adaptive quadrature phase shift keying modulation technology, a downlink signal of a to-be-detected voice service channel corresponding to a to-be-detected terminal; the method characterised by performing frequency offset detection on an uplink signal on the to-be-detected voice service channel after the modulating, to obtain a frequency offset detection result of the uplink signal of the to-be-detected voice service channel; and sending the frequency offset detection result to a base station controller; wherein the performing frequency offset detection on an uplink signal on the to-be-detected voice service channel comprises: detecting a plurality of frequency offset values of the uplink signal through uplink automatic frequency correction; acquiring a frequency offset change value according to detected frequency offset values, wherein the frequency offset change value is equal to a difference between a first frequency offset value and a second frequency offset value; and determining, according to the frequency offset change value and a present threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal. In the following the expressions "modulating", and "scrambling" are used with the same meaning.

A base transceiver station, comprising: a scrambling module, configured to modulate, by using an adaptive quadrature phase shift keying modulation technology, a downlink signal of a to-be-detected voice service channel corresponding to a to-be-detected terminal; characterised in that the base transceiver station comprises a detection module, configured to perform frequency offset detection on an uplink signal on the to-be-detected voice service channel after the modulating performed by the scrambling module, to obtain a frequency offset detection result of the uplink signal of the to-be-detected voice service channel; and a first sending module, configured to send the frequency offset detection result obtained by the detection module to a base station controller; wherein the detection module comprises: a detection unit configured to detect detecting a plurality of frequency offset values of the uplink signal through uplink automatic frequency correction; an acquiring unit configured to acquire acquiring a frequency offset change value according to detected frequency offset values, wherein the frequency offset change value is equal to a difference between a first frequency offset value and a second frequency offset value; a determining unit configured to determine determining, according to the frequency offset change value and a present threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal.

According to another aspect, a method for detecting terminal frequency offset is provided, including: receiving a frequency offset detection result that is sent by a base transceiver station and obtained after the base transceiver station detects a plurality of frequency offset values frequency offset detection on an uplink signal on a to-be-detected voice service channel after modulating, wherein the to-be-detected voice service channel is a voice service channel corresponding to a to-be-detected terminal; the method characterised by acquiring a frequency offset change value according to detected frequency offset values, wherein the frequency offset change value is equal to a difference between a first frequency offset value and a second frequency offset value; and determining, according to the frequency offset change value and a present threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal.

A base station controller is further provided, including: a second receiving module, configured to receive a frequency offset detection result that is sent by a base transceiver station and obtained after a determining unit of the base transceiver station performs frequency offset detection on an uplink signal on a to-be-detected voice service channel after modulating, wherein the to-be-detected voice service channel is a voice service channel corresponding to a to-be-detected terminal; characterised in that the base station controller comprises an acquiring unit acquiring a frequency offset change value according to detected frequency offset values, wherein the frequency offset change value is equal to a difference between a first frequency offset value and a second frequency offset value; and a determining unit determining, according to the frequency offset change value and a present threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal.

The invention is defined by the appended claims 1-11. All other references to embodiments have to be interpreted as examples useful for understanding the invention.

### BRIEF DESCRIPTION OF THE DRAWINGS

FIG. 1 is a flowchart of a method for detecting terminal frequency offset according to an embodiment of the present invention;
FIG. 2 is a flowchart of a method for detecting terminal frequency offset according to another embodiment of the present invention;
FIG. 3 is a flowchart of a method for detecting terminal frequency offset according to still another embodiment of the present invention;
FIG. 4 is a schematic diagram of a base transceiver station according to an embodiment of the present invention;
FIG. 5 is a schematic diagram of a base transceiver station according to another embodiment of the present invention;
FIG. 6 is a schematic diagram of a base station controller according to an embodiment of the present invention; and
FIG. 7 is a schematic diagram of a base station controller according to another embodiment of the present invention.

### DETAILED DESCRIPTION OF THE EMBODIMENTS

To make the objectives, technical solutions, and advantages of the present invention more comprehensible, the following further describes the technical solutions of the present invention in detail with reference to embodiments and the accompanying drawings.

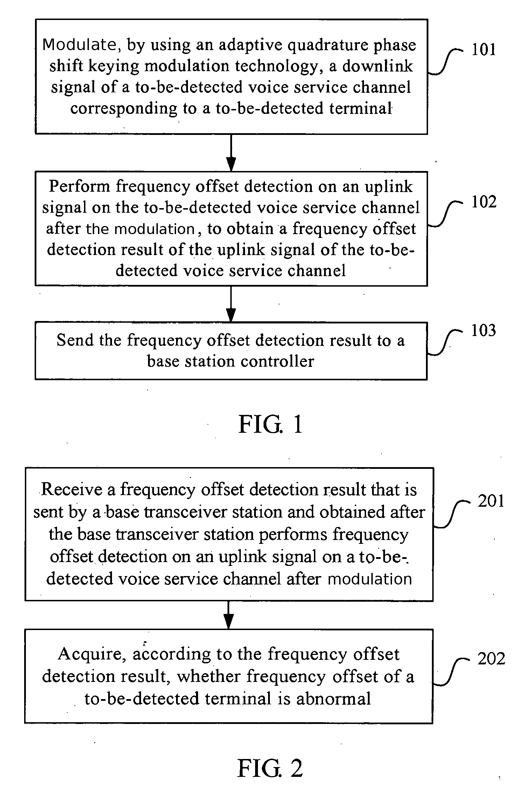

FIG. 1 is a flowchart of a method for detecting terminal frequency offset according to an embodiment of the present invention. As shown in FIG. 1, the method includes:
Step 101: Scramble, by using an adaptive quadrature phase shift keying modulation technology, a downlink signal of a to-be-detected voice service channel corresponding to a to-be-detected terminal.

The embodiment of the present invention may apply to a GSM system, where the to-be-detected terminal in this embodiment may be a terminal supporting a GSM mode. A GSM terminal is taken as an example for description below. In the GSM system, a VAMOS technology may support participation of an existing GSM terminal. When the GSM terminal receives a voice service multiplexed using the VAMOS technology, a frequency offset abnormality may occur. As a result, voice quality may be affected. For the purpose of ensuring the voice quality in the VAMOS technology, GSM terminals on which abnormalities may occur can be identified in advance, so that protective measures are taken for these GSM terminals. After protective measures are taken for these GSM terminals, it can be ensured that no abnormality occurs or few abnormalities occur on these GSM terminals in the VAMOS technology, thereby ensuring the voice quality.

When a GSM terminal performs a normal voice service conversation, the GSM terminal may be detected. In this case, the GSM terminal is a to-be-detected terminal, and a voice service channel corresponding to the GSM terminal is a to-be-detected voice service channel. A base station system (Base Station System, BSS for short) may detect any GSM terminal that is performing a voice service conversation. The BSS may determine a to-be-detected terminal according to a requirement. The BSS includes a base station controller (Base Station Controller, BSC for short) and a base transceiver station (Base Transceiver Station, BTS for short).

After determining the to-be-detected terminal, the BSS acquires a device type identifier of the to-be-detected device and a channel identifier of a voice service channel corresponding to the to-be-detected terminal. The device type identifier of each terminal is used to identify a type of the terminal, and the device type identifier may be a type allocation code (Type Allocation Code, TAC for short) in an international mobile equipment identity (International Mobile Equipment Identity, IMEI for short). TACs of terminals of a type are the same.

Further, it may be regarded that features of GSM terminals of a same type are the same: In the embodiment of the present invention, when whether a certain GSM terminal may be abnormal is identified, it can be acquired that whether a GSM terminal of the same type as the GSM terminal may be abnormal.

The channel identifier of the voice service channel may be a service channel number, and the service channel number is used to uniquely identify a voice service channel.

When the BSS determines to detect a certain GSM terminal that is performing a normal voice service, the determination may be performed by the BTS or the BSC. After the BTS performs the determination, the BTS directly scrambles, by using the adaptive quadrature phase shift keying (Adaptive Quadrature Phase Shift Keying, AQPSK for short) modulation technology, a downlink signal of the to-be-detected voice service channel. After the BSC performs the determination, the BSC sends detection instruction signaling to the BTS to instruct the BTS to scramble the to-be-detected voice service channel, where the scrambling may be performed by using an AQPSK modulation technology.

Step 102: Perform frequency offset detection on an uplink signal on the to-be-detected voice service channel after the scrambling, to obtain a frequency offset detection result of the uplink signal of the to-be-detected voice service channel.

The BTS performs frequency offset detection on an uplink signal on the voice service channel after the scrambling. Then, the BTS may obtain a frequency offset detection result of the uplink signal of the voice service channel after the downlink signal of the to-be-detected voice service channel is scrambled.

The frequency offset detection result may be a frequency offset value of the uplink signal or a frequency offset change value of the uplink signal, or the frequency offset detection result may be a detection result about whether frequency offset of the to-be-detected terminal is abnormal.

Step 103: Send the frequency offset detection result to the base station controller.

The BTS may send the frequency offset detection result to the BSC by using detection result signaling. The detection result may further include identifier information of the to-be-detected voice service channel.

When the frequency offset detection result is the frequency offset value of the uplink signal or the frequency offset change value of the uplink signal, the BSC may perform calculation, according to the frequency offset value or the frequency offset change value, to obtain a result about whether frequency offset is abnormal. When the frequency offset detection result is the result about whether the frequency offset is abnormal, the BSC may directly acquire, without the need of calculation, the result about whether the frequency offset is abnormal. Then, the BSC may acquire, according to the result about whether the frequency offset is abnormal and the identifier information of the voice service channel, whether frequency offset may be abnormal when the terminal and a terminal of the same type as the terminal applying a VAMOS technology.

After it is detected that an abnormality may occur when a GSM terminal of a certain type applies the VAMOS technology, a protective measure may be taken for the GSM terminal when the GSM terminal of this type practically applies the VAMOS technology.

In this embodiment, a GSM terminal may be detected when the GSM terminal performs a normal voice service. In this way, the normal voice service of the GSM terminal is not affected.

In the embodiment of the present invention, a base transceiver station scrambles a downlink signal of a to-be-detected voice service channel corresponding to a to-be-detected terminal, then performs frequency offset detection on an uplink signal on the to-be-detected voice service channel after the scrambling, to obtain a frequency offset detection result of the uplink signal of the to-be-detected voice service channel when the downlink signal of the to-be-detected voice service channel is multiplexed, and sends the detection result to a base station controller, so that the base station controller acquires whether frequency offset may be abnormal when the to-be-detected terminal applies a VAMOS technology.

FIG. 2 is a flowchart of a method for detecting terminal frequency offset according to another embodiment of the present invention. As shown in FIG. 2, the method includes:
Step 201: Receive a frequency offset detection result that is sent by a base transceiver station and obtained after the base transceiver station performs frequency offset detection on an uplink signal on a to-be-detected voice service channel after scrambling, where the to-be-detected voice service channel is a voice service channel corresponding to a to-be-detected terminal.

The BTS scrambles to-be-detected voice service information, and performs frequency offset detection on an uplink signal on the to-be-detected voice service channel after the scrambling, to obtain a frequency offset detection result. Then, the BTS sends the frequency offset detection result to a BSC.

Step 202: Acquire, according to the frequency offset detection result, whether frequency offset of the to-be-detected terminal is abnormal.

When the frequency offset detection result is a frequency offset value of the uplink signal or a frequency offset change value of the uplink signal, the BSC may perform calculation, according to the frequency offset value or the frequency offset change value, to obtain a result about whether the frequency offset is abnormal. When the frequency offset detection result is a result about whether the frequency offset is abnormal, the BSC may directly acquire, without the need of calculation, the result about whether the frequency offset is abnormal. Then, the BSC acquires whether frequency offset may be abnormal when the terminal and a terminal of the same type as the terminal apply in a VAMOS technology.

After acquiring the detection result about whether the frequency offset of the terminal may be abnormal, the BSC may add the detection result and a device type identifier of the terminal corresponding to the detection result to a frequency offset detection database. That is to say, the frequency offset detection database may store a detection result of a detected GSM terminal of each type; the detection result indicates whether frequency offset may be abnormal when a GSM terminal of a certain type applies a VAMOS technology; a type of a GSM terminal may be determined according to a device type identifier, and the device type identifier is, for example, a TAC code in an IMEI identifier. The frequency offset detection database may be indexed according to the TAC.

After the frequency offset detection database is established and when a certain terminal needs to be detected according to a requirement, the BSC may first query whether a detection result of a terminal of this type is stored in the frequency offset database. Step 201 and step 202 are performed when no detection result of a terminal of this type is found.

In the embodiment of the present invention, a base station controller receives a frequency offset detection result sent by a base transceiver station. The frequency offset detection result is obtained after the base transceiver station performs frequency offset detection on an uplink signal on a to-be-detected voice service channel after scrambling. Then, the base station controller acquires, according to the frequency offset detection result, whether frequency offset may be abnormal when a to-be-detected terminal corresponding to the to-be-detected voice service channel applies a VAMOS technology.

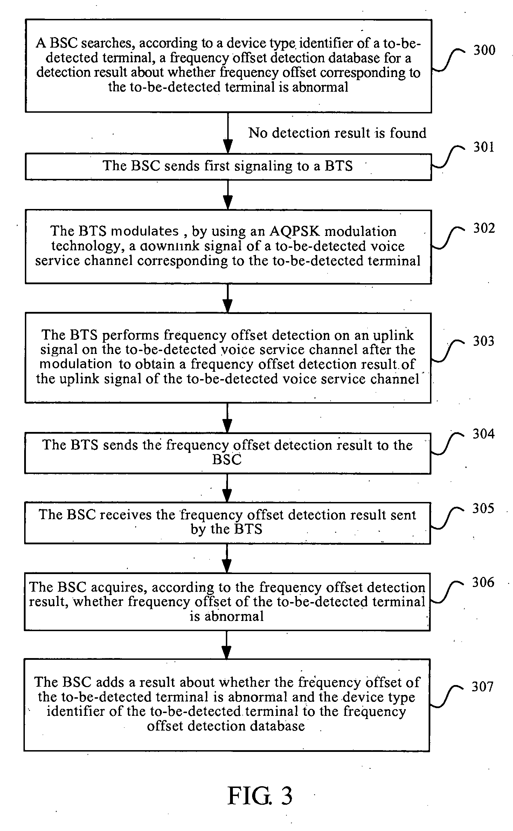

FIG. 3 is a flowchart of a method for detecting terminal frequency offset according to still another embodiment of the present invention. As shown in FIG. 3, the method includes:
Step 301: A BSC sends first signaling to a BTS, where the first signaling includes an information element used to instruct to perform frequency offset detection for a to-be-detected voice service channel, and the first signaling may further include a channel identifier of the to-be-detected voice service channel.

In this embodiment, a to-be-detected terminal may, for example, be a GSM terminal, and the to-be-detected voice service channel may, for example, be a voice service channel corresponding to the GSM terminal.

When the BSC determines to perform frequency offset detection for a GSM terminal that is performing a normal voice service, the BSC acquires a channel identifier of a voice service channel corresponding to the GSM terminal, and the channel identifier is, for example, a service channel number. Then, the BSC may send detection instruction signaling including the channel identifier to the BTS through an Abis interface to instruct the BTS to perform frequency offset detection for the voice service channel corresponding to the channel identifier. The Abis interface is a communication interface between the BSC and the BTS.

It should be noted that if the BTS determines to perform frequency offset detection for a certain GSM terminal, the BTS may directly perform frequency offset detection on a voice service channel corresponding to the GSM terminal without the need of receiving the instruction of the BSC.

Step 302: The BTS scrambles, by using an AQPSK modulation technology, a downlink signal of the to-be-detected voice service channel corresponding to the to-be-detected terminal.

After the BTS receives the detection instruction signaling sent by the BSC or the BTS directly triggers frequency offset detection for a certain terminal, the BTS scrambles a downlink signal of a voice service channel corresponding to the terminal. A scrambling manner may be to use the AQPSK modulation technology to simulate a situation in which a GSM terminal corresponding to the voice service channel applies a VAMOS technology, thereby performing frequency offset detection on an uplink signal sent by the GSM terminal.

Specifically, scrambling the downlink signal of the voice service channel by using the AQPSK modulation technology may be as follows: Add an interfering signal to the downlink signal of the voice service channel by using the AQPSK modulation technology defined in a VAMOS standard, for example, use the downlink signal (voice service) of the voice service channel as an I path, and use the added interfering signal as a Q path. A training sequence of the interfering signal can be configured, for example, configuration principles may be to configure the training sequence of the interfering signal to be of the same type as and orthogonal to a training sequence of the downlink signal. A dummy burst (Dummy burst) defined in a GSM standard or a random number is filled in a non-training sequence part of the interfering signal, and signal strength of the interfering signal is higher than or equal to that of the downlink signal. The signal strength of the interfering signal may be configured by adjusting an α value of an AQPSK modulated I-path signal. When α is a positive value, it indicates that the strength of the I-path signal is α dB higher than that of a Q-path signal, and when α is a negative value, it indicates that the strength of the I-path signal is α dB lower than that of a Q-path signal, so that the strength of the interfering signal can be higher than or equal to that of a voice service signal as long as the α value of the downlink I-path signal bearing a voice service is configured to be less than or equal to 0.

It should be noted that in a VAMOS technology, after the I-path signal and the Q-path signal are multiplexed, the abnormality of frequency offset is likely to occur on a terminal corresponding to a signal with lower signal strength. Therefore, for the purpose of allowing a possible abnormality of frequency offset to appear as soon as possible to improve detection efficiency, in this embodiment, the α value of the downlink signal may be configured to be less than or equal to 0, that is, the signal strength of the interfering signal is configured to be higher than or equal to that of a normal downlink signal. Further, for the purpose of imposing no obvious impact on voice quality corresponding to the downlink signal, the α value of the downlink signal may not be configured to an extremely small value, for example, - 4 ≤ α ≤ 0.

Step 303: The BTS performs frequency offset detection on an uplink signal on the to-be-detected voice service channel after the scrambling, to obtain a frequency offset detection result of the uplink signal of the to-be-detected voice service channel.

After scrambling the downlink signal in step 302, the BTS performs frequency offset detection on an uplink signal on the voice service channel after the scrambling. Before performing frequency offset detection, the BTS may first acquire a detection parameter of the frequency offset detection, where the detection parameter may be preconfigured in the BTS or sent by the BSC to the BTS. Specifically, the BTS may acquire the detection parameter in the following two manners: One is that the BSC sends the detection parameter to the BTS, for example, the detection parameter may be included in the first signaling sent by the BSC; and the other one is that a detection parameter corresponding to each voice service channel is pre-stored on the BTS, and when performing frequency offset detection on a certain voice service channel, the BTS is capable of directly obtaining the detection parameter through query.

This step may specifically include the following two manners:

A first manner is as follows:
Step a1: The BTS acquires a detection parameter, where the detection parameter includes a detection period, and the detection period indicates an interval for periodically performing frequency offset detection.
Step a2: The BTS periodically detects a frequency offset value of an uplink signal through uplink automatic frequency correction (Automatic Frequency Correction, AFC for short) according to the detection period. A GSM terminal keeps synchronous with a network by tracing frequency offset of a downlink signal of the network, that is, first receives a frequency offset value of the downlink signal relative to a local clock through downlink AFC estimation, and then correspondingly changes a sending frequency of an uplink signal by adjusting a local clock frequency. If downlink frequency offset of the terminal is abnormal, the abnormality may be directly reflected on the sending frequency of the uplink signal of the terminal. In this way, frequency offset of the uplink signal detected through uplink AFC of a base station is equivalent to downlink abnormal frequency offset estimated by a to-be-detected GSM terminal.

The BTS acquires multiple frequency offset values of the uplink signal, where a time interval between any two consecutive frequency offset values is a detection period.

When the frequency offset detection result is the frequency offset value of the uplink signal, the BTS sends the frequency offset values of the uplink signal that are acquired in this step to the BSC, that is, step 304 is performed after this step; and when the frequency offset detection result is not the frequency offset value of the uplink signal, step a3 is performed after this step.

Step a3: The BTS obtains a first frequency offset change value in each detection period according to each of detected frequency offset values of the uplink signal. A first frequency offset change value in each detection period is equal to a difference between a frequency offset value corresponding to the end of the detection period and a frequency offset value corresponding to the start of the detection period. That is to say, a detection period generally includes multiple air interface frames, and a frequency offset change value is equal to a difference between a frequency offset value of an air interface frame corresponding to the end of the detection period and a frequency offset value of an air interface frame corresponding to the start of the detection period. The end of a detection period is the start of a next detection period. The BTS acquires multiple frequency offset values f1, f2, f3, ..., fn, ..., where f1 may be a frequency offset value corresponding to the start of a first detection period; f2 may be a frequency offset value corresponding to the end of the first detection period, and f2 may also be a frequency offset value corresponding to the start of a second detection period; f3 may be a frequency offset value corresponding to the end of the second detection period, and f3 may also be a frequency offset value corresponding to the start of a third detection period; by analogy, fn may be a frequency offset value corresponding to the end of a (n-1)^{th} detection period, and fn may also be a frequency offset value corresponding to the start of a n^{th} detection period. The first frequency offset change values in the detection periods may, for example, be in sequence: f2 - f1, f3 - f2, ..., fn - f(n-1), ....

When the frequency offset detection result is the first frequency offset change value, the BTS sends the first frequency offset change value acquired in this step to the BSC, that is, step 304 is performed after this step; and when the frequency offset detection result is not the frequency offset value of the uplink signal or the first frequency offset change value of the uplink signal, step a4 is performed after this step.

Step a4: The BTS determines, according to the first frequency offset change value and a threshold, whether the frequency offset of the to-be-detected terminal is abnormal. The threshold may be pre-stored in the BTS or sent by the BSC to the BTS.

The BTS compares the first frequency offset change value with the threshold. If N first frequency offset change values are greater than or equal to the threshold, it is determined that the frequency offset of the to-be-detected terminal is abnormal; otherwise, it is determined that the frequency offset of the to-be-detected terminal is normal; where N is greater than or equal to 1.

In the determining procedure in step a4, a detection duration further needs to be considered. The detection duration is included in detection parameters and is one of the detection parameters. The detection duration indicates an overall time length for performing detection. If it is not detected, within the overall time length, that the frequency offset is abnormal, it is regarded that the frequency offset is normal. Step a4 may specifically include: if N frequency offset change values are greater than or equal to the threshold in a preset detection duration, determining that the frequency offset of the to-be-detected GSM terminal is abnormal; otherwise, determining that the frequency offset of the to-be-detected GSM terminal is normal; where N ≥ 1, and a specific value of N may be set according to a specific condition.

In this step, a result about whether the frequency offset of the to-be-detected terminal is abnormal is obtained. In this case, the frequency offset detection result is whether the frequency offset of the to-be-detected terminal is abnormal. Then, step 304 is performed.

A second manner is as follows:
Step a1': The BTS acquires a detection parameter, where the detection parameter includes a time interval.
Step a2': The BTS detects frequency offset values of each air interface frame of the uplink signal through uplink AFC.

The BTS detects frequency offset values of each air interface frame of the uplink signal.

When the frequency offset detection result is the frequency offset values of the air interface frames, the BTS sends the frequency offset values of the air interface frames acquired in this step to the BSC, that is, step 304 is performed after this step; when the frequency offset detection result is not the frequency offset values of the air interface frames, step a3' is performed after this step.

Step a3': The BTS obtains, according to frequency offset values of each air interface frame, a second frequency offset change value between any two air interface frames with the time interval, where the second frequency offset change value is a difference between two frequency offset values, and the two frequency offset values are corresponding to two air interface frames with the time interval, respectively.

The BTS acquires frequency offset values f'1, f'2, f'3, ..., f'n, ... of each air interface frame. A preset time interval is t, the number of air interface frames between two air interface frames with the time interval t is k. In this case, second frequency offset change values between any two air interface frames with the time interval t may, for example, be in sequence: f'(k+1) - f 1, f'(k+2) - f'2, ..., f'(k+n) - f'n, ....

When the frequency offset detection result is the second frequency offset change value, the BTS sends the second frequency offset change value acquired in this step to the BSC, that is, step 304 is performed after this step; when the frequency offset detection result is not the frequency offset values of the air interface frames or the second frequency offset change value of the air interface frames, step a4' is performed after this step.

Step a4': The BTS determines, according to the second frequency offset change value and a threshold, whether the frequency offset of the to-be-detected terminal is abnormal. The threshold may be pre-stored in the BTS or sent by the BSC to the BTS.

The BTS compares the second frequency offset change value with the threshold. If N second frequency offset change values are greater than or equal to the threshold in a preset detection duration, it is determined that the frequency offset of the to-be-detected terminal is abnormal, where N is greater than or equal to 1.

For details about this step, reference may be made to the description in step a4. The details are not repeated herein.

In this step, a result about whether the frequency offset of the to-be-detected terminal is abnormal is obtained. In this case, the frequency offset detection result is whether the frequency offset of the to-be-detected terminal is abnormal. Then, step 304 is performed.

When the detection method in the first manner is adopted, one frequency offset change value can be obtained only each time a detection period passes, whereas when the detection method in the second manner is adopted, once a first detection period passes, one frequency offset change value can be obtained each time an air interface frame passes, and in this case, a result of the frequency offset can be detected more quickly.

It should be noted that, in specific implementation, when any one of the two manners is adopted for performing detection, it is unnecessary to wait for the end of a preset detection duration to determine whether the terminal is abnormal. Instead, frequency offset change values that are greater than or equal to the threshold can be counted in real time, and when the count reaches N, it can be determined that the frequency offset of the terminal is abnormal.

Step 304: The BTS sends the frequency offset detection result to the BSC.

After the frequency offset detection result is obtained in step 303, the BTS may send signaling including the frequency offset detection result to the BSC through an Abis interface.

Step 305: The BSC receives the frequency offset detection result sent by the BTS.

As can be seen from the description in step 303, the frequency offset detection result received by the BSC may be any one of the following parameters: the frequency offset value of the uplink signal, the first frequency offset change value, the frequency offset values of the air interface frames of the uplink signal, the second frequency offset change value, and whether the frequency offset of the to-be-detected terminal is abnormal.

Step 306: The BSC acquires, according to the frequency offset detection result, whether frequency offset of the to-be-detected terminal is abnormal.

When the frequency offset detection result is the frequency offset value of the uplink signal, a specific procedure of step 306 may include the following: The BSC acquires the first frequency offset change values in each detection period according to the detected frequency offset values of the uplink signal, and then determines, according to the first frequency offset change values and the preset threshold, whether the frequency offset of the to-be-detected terminal is abnormal. For a specific processing procedure of this step, reference may be made to the description in step a3 and step a4. The difference between this step and step a3 and step a4 lies in that executors are different.

When the frequency offset detection result is the first frequency offset change values, a specific procedure of step 306 may include the following: The BSC determines, according to the first frequency offset change value and the preset threshold, whether the frequency offset of the to-be-detected terminal is abnormal. For a specific processing procedure of this step, reference may be made to the description in step a4. The difference between this step and step a4 lies in that executors are different.

When the frequency offset detection result is the frequency offset values of the air interface frames of the uplink signal, a specific procedure of step 306 may include the following: The BSC acquires the second frequency offset change values between any two air interface frames with the time interval according to the frequency offset values of the air interface frames, and then determines, according to the second frequency offset change values and the preset threshold, whether the frequency offset of the to-be-detected terminal is abnormal. For a specific processing procedure of this step, reference may be made to the description in step a3' and step a4'. The difference between this step and step a3' and step a4' lies in that executors are different.

When the frequency offset detection result is the second frequency offset change values, a specific procedure of step 306 may include the following: The BSC determines, according to the second frequency offset change values and the preset threshold, whether the frequency offset of the to-be-detected terminal is abnormal. For a specific processing procedure of this step, reference may be made to the description in step a4'. The difference between this step and step a4' lies in that executors are different.

When the frequency offset detection result is whether the frequency offset of the to-be-detected terminal is abnormal, the BSC directly acquires a final detection result.

Step 307: The BSC adds the result about whether the frequency offset of the to-be-detected terminal is abnormal and the device type identifier of the to-be-detected terminal to a frequency offset detection database.

The BSC adds the received detection result about whether the frequency offset of the to-be-detected terminal is abnormal and the device type identifier of the corresponding GSM terminal to the frequency offset detection database to update the database. The device type identifier may be a TAC and the database adopts the TAC of the terminal as an index.

For the purpose of reducing overhead of detection initiated on a practical network, query may be performed in the frequency offset detection database first before frequency offset detection is performed for a GSM terminal. That is to say, before step 301, the following step may be included:

Step 300: A BSC searches, according to a device type identifier of a to-be-detected terminal, a frequency offset detection database for a detection result about whether frequency offset corresponding to the to-be-detected terminal is abnormal; and if no detection result corresponding to the to-be-detected terminal is found, perform step 301.

If the BSC finds, in the frequency offset detection database, a detection result corresponding to a terminal of the same type as the to-be-detected terminal, the subsequent step may be directly performed according to the detection result without the need of instructing the BTS to detect the to-be-detected terminal. The subsequent step may, for example, be as follows: When the detection result is that the frequency offset is abnormal, a dedicated measure is taken for the terminal to ensure voice quality after the terminal applies VAMOS multiplexing; when the detection result is that the frequency offset is normal, the terminal may be directly used to participate in VAMOS multiplexing.

In the embodiment of the present invention, a base station controller may send detection instruction signaling to a base transceiver station to instruct the base transceiver station to scramble a downlink signal of a to-be-detected voice service channel indicated in the detection instruction signaling; then the base transceiver station performs frequency offset detection on an uplink signal of the to-be-detected voice service channel after the scrambling, to obtain a frequency offset detection result of the uplink signal of the to-be-detected voice service channel when the downlink signal of the to-be-detected voice service channel is multiplexed; and the base station controller receives the frequency offset detection result sent by the base transceiver station to acquire whether frequency offset is abnormal when the to-be-detected terminal applies a VAMOS technology. With the method provided in the embodiment of the present invention, a terminal on which an abnormality may occur during VAMOS multiplexing may be quickly and accurately identified, and impact on normal voice service quality of the terminal is small.

Persons of ordinary skills in the art may understand that all or part of steps of the methods in the embodiments may be implemented by a program instructing relevant hardware. The program may be stored in a computer readable storage medium. When the program is run, the steps of the methods in the embodiments are performed. The above storage medium includes various mediums capable of storing program codes, such as a ROM, a RAM, a magnetic disk or an optical disk.

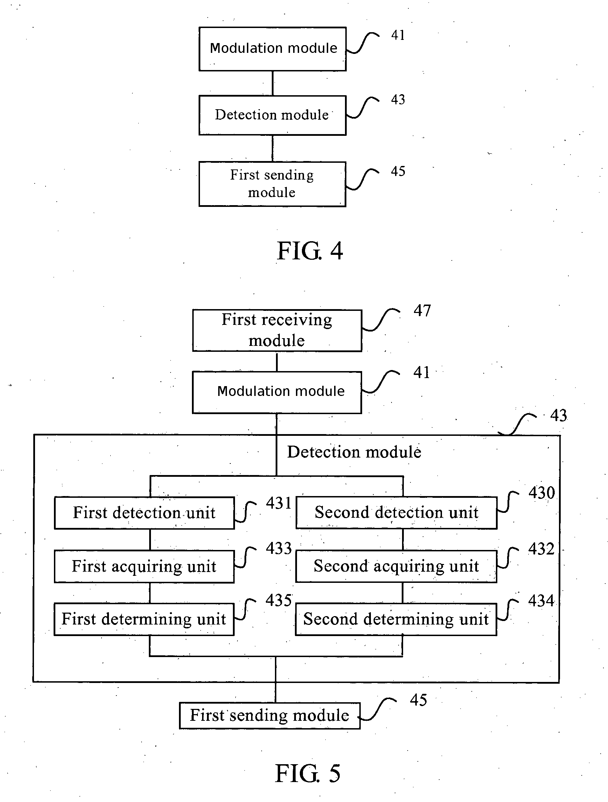

FIG. 4 is a schematic diagram of a base transceiver station according to an embodiment of the present invention. As shown in FIG. 4, the base transceiver station includes: a scrambling module 41, a detection module 43, and a first sending module 45.

The scrambling module 41 is configured to scramble, by using an adaptive quadrature phase shift keying modulation technology, a downlink signal of a to-be-detected voice service channel corresponding to a to-be-detected terminal.

The detection module 43 is configured to perform frequency offset detection on an uplink signal on the to-be-detected voice service channel after the scrambling performed by the scrambling module 41, to obtain a frequency offset detection result of the uplink signal of the to-be-detected voice service channel.

The first sending module 45 is configured to send the frequency offset detection result obtained by the detection module 43 to a base station controller.

For the work process and work principle of each of the modules in this embodiment, reference is made to the description in each of the preceding method embodiments. Details are not repeated herein.

In the embodiment of the present invention, a scrambling module scrambles a downlink signal of a to-be-detected voice service channel corresponding to a to-be-detected terminal; then a detection module performs frequency offset detection on an uplink signal on the to-be-detected voice service channel after the scrambling, to obtain a frequency offset detection result of the uplink signal of the to-be-detected voice service channel when the downlink signal of the to-be-detected voice service channel is multiplexed; and a first sending module sends the detection result to a base station controller, so that the base station controller acquires whether frequency offset may be abnormal when the to-be-detected terminal applies a VAMOS technology.

FIG. 5 is a schematic diagram of a base transceiver station according to another embodiment of the present invention. As shown in FIG. 5, based on the embodiment illustrated in FIG. 4, the base transceiver station further includes: a first receiving module 47.

The first receiving module 47 is configured to receive first signaling sent by the base station controller, where the first signaling includes an information element used to instruct to perform frequency offset detection for the to-be-detected voice service channel,

The scrambling module 41 may be specifically configured to: add, by using an adaptive quadrature phase shift keying modulation technology, an interfering signal to the downlink signal of the to-be-detected voice service channel, where a training sequence of the interfering signal is of the same type as and orthogonal to a training sequence of the downlink signal, a dummy burst or a random number is filled in a non-training sequence part of the interfering signal, and signal strength of the interfering signal is higher than or equal to that of the downlink signal.

When the detection frequency offset detection result is frequency offset values of the uplink signal, the detection module 43 may be specifically configured to periodically detect a frequency offset value of the uplink signal through uplink automatic frequency correction. In this case, it is equivalent to that the detection module 43 includes only a first detection unit 431.

When the frequency offset detection result is a first frequency offset change values, the detection module 43 includes a first detection unit 431 and a first acquiring unit 433.

When the frequency offset detection result is whether frequency offset of the to-be-detected terminal is abnormal, the detection module 43 includes a first detection unit 431, a first acquiring unit 433, and a first determining unit 435.

The first detection unit 431 is configured to periodically detect a frequency offset value of the uplink signal through uplink automatic frequency correction. The first acquiring unit 433 is configured to acquire the first frequency offset change value in each detection period according to frequency offset values of the uplink signal that are detected by the first detection unit 431, where a first frequency offset change value in each detection period is equal to a difference between a frequency offset value corresponding to the end of the detection period and a frequency offset value corresponding to the start of the detection period. The first determining unit 435 is configured to determine, according to the first frequency offset change value acquired by the first acquiring unit 433 and a preset threshold, whether the frequency offset of the to-be-detected terminal is abnormal.

The first determining unit 435 is specifically configured to, if N first frequency offset change values are greater than or equal to the threshold in a preset detection duration, determine that the frequency offset of the to-be-detected terminal is abnormal, where N is greater than or equal to 1.

When the detection frequency offset detection result is frequency offset values of air interface frames, the detection module 43 is specifically configured to detect the frequency offset values of the air interface frames of the uplink signal through uplink automatic frequency correction. In this case, it is equivalent to that the detection module 43 includes only a second detection unit 430.

When the frequency offset detection result is second frequency offset change values, the detection module 43 includes a second detection unit 430 and a second acquiring unit 432.

When the frequency offset detection result is whether the frequency offset of the to-be-detected terminal is abnormal, the detection module 43 includes a second detection unit 430, a second acquiring unit 432, and a second determining unit 434.

The second detection unit 430 is configured to detect the frequency offset values of the air interface frames of the uplink signal through uplink automatic frequency correction. The second acquiring unit 432 is configured to acquire a second frequency offset change value between any two air interface frames with a time interval according to the frequency offset values of the air interface frames detected by the second detection unit, where a second frequency offset change value is a difference between two frequency offset values and the two frequency offset values are corresponding to two air interface frames with the time interval, respectively. The second determining unit 434 is configured to determine, according to the second frequency offset change values acquired by the second acquiring unit 432 and a preset threshold, whether the frequency offset of the to-be-detected terminal is abnormal.

The second determining unit 434 may be specifically configured to, if N second frequency offset change values are greater than or equal to the threshold in a preset detection duration, determine that the frequency offset of the to-be-detected terminal is abnormal, where N is greater than or equal to 1.

For the work process and work principle of each of the modules and units in this embodiment, reference is made to the description in each of the preceding method embodiments. Details are not repeated herein.

In the embodiment of the present invention, a base transceiver station scrambles a downlink signal of a to-be-detected voice service channel, then performs frequency offset detection on an uplink signal on the to-be-detected voice service channel after the scrambling, to obtain a frequency offset detection result of the uplink signal of the to-be-detected voice service channel when the downlink signal of the to-be-detected voice service channel is multiplexed, and sends the detection result to a base station controller, so that the base station controller acquires whether frequency offset may be abnormal when a to-be-detected terminal corresponding to the to-be-detected voice service channel applies a VAMOS technology. With the method provided in the embodiment of the present invention, a terminal on which an abnormality may occur during VAMOS multiplexing may be quickly and accurately identified, and impact on normal voice service quality of the terminal is small.

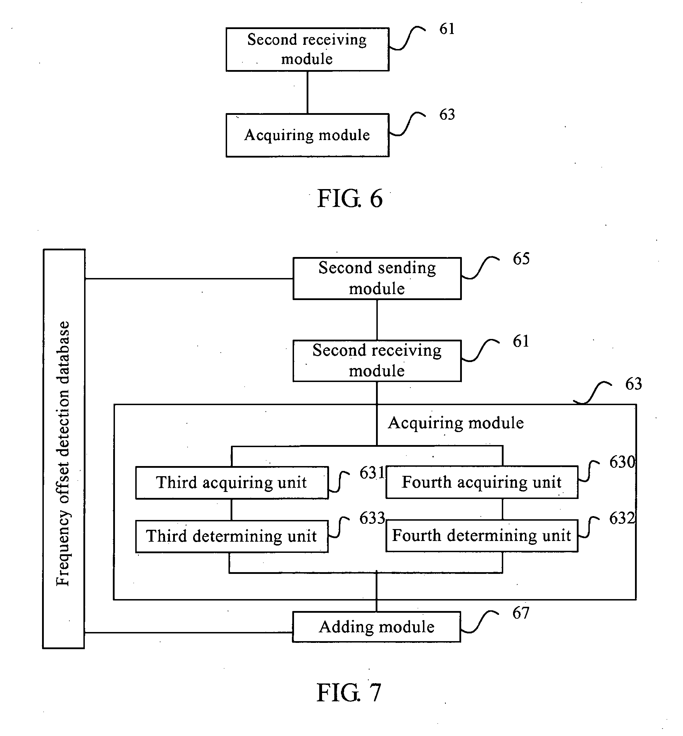

FIG. 6 is a schematic diagram of a base station controller according to an embodiment of the present invention. As shown in FIG. 6, the base station controller includes a second receiving module 61 and an acquiring module 63.

The second receiving module 61 is configured to receive a frequency offset detection result that is sent by a base transceiver station and obtained after the base transceiver station performs frequency offset detection on an uplink signal on a to-be-detected voice service channel after scrambling, where the to-be-detected voice service channel is a voice service channel corresponding to a to-be-detected terminal.

The acquiring module 63 is configured to acquire, according to the frequency offset detection result, whether frequency offset of the to-be-detected terminal is abnormal.

For the work process and work principle of each of the modules in this embodiment, reference is made to the description in each of the method embodiments. Details are not repeated herein.

In the embodiment of the present invention, a second receiving module receives a frequency offset detection result sent by a base transceiver station. The frequency offset detection result is obtained after the base transceiver station performs frequency offset detection on an uplink signal on a to-be-detected voice service channel after scrambling. Then, the acquiring module acquires, according to the frequency offset detection result, whether frequency offset may be abnormal when a to-be-detected terminal corresponding to the to-be-detected voice service channel applies a VAMOS technology.

FIG. 7 is a schematic diagram of a base station controller according to another embodiment of the present invention. As shown in FIG. 7, base on the embodiment illustrated in FIG. 6, the base station controller further includes a second sending module 65 and an adding module 67.

The second sending module 65 is configured to send first signaling to the base transceiver station, where the first signaling includes an information element used to instruct the base transceiver station to perform frequency offset detection for the to-be-detected voice service channel.

The adding module 67 is configured to add a result about whether the frequency offset of the to-be-detected terminal is abnormal and a device type identifier of the to-be-detected terminal to a frequency offset detection database.

When the frequency offset detection result is a frequency offset value of the uplink signal, the acquiring module 63 includes a third acquiring unit 631 and a third determining unit 633.

When the frequency offset detection result is a first frequency offset change value, the acquiring module 63 includes a third determining unit 633. A first frequency offset change value is equal to a difference between a frequency offset value corresponding to the end of a detection period and a frequency offset value corresponding to the start of the detection period.

The third acquiring unit 631 is configured to acquire the first frequency offset change value in each detection period according to detected frequency offset values of the uplink signal, where the first frequency offset change value in each detection period is equal to a difference between a frequency offset value corresponding to the end of the detection period and a frequency offset value corresponding to the start of the detection period. The third determining unit 633 is configured to determine, according to the first frequency offset change values and a preset threshold, whether the frequency offset of the to-be-detected terminal is abnormal.

The third determining unit 633 is specifically configured to, if N frequency offset change values are greater than or equal to the threshold in a preset detection duration, determine that the frequency offset of the to-be-detected terminal is abnormal, where N is greater than or equal to 1.

When the frequency offset detection result is frequency offset values of air interface frames of the uplink signal, the acquiring module 63 includes a fourth acquiring unit 630 and a fourth determining unit 632.

When the frequency offset detection result is a second frequency offset change value, the acquiring module 63 includes a fourth determining unit 632. A second frequency offset change value is a difference between two frequency offset values, where the two frequency offset values are corresponding to two air interface frames with a time interval, respectively.

The fourth acquiring unit 630 is configured to acquire a second frequency offset change value between any two air interface frames with the time interval according to the frequency offset values of the air interface frames, where the second frequency offset change value is a difference between two frequency offset values, and the two frequency offset values are corresponding to two air interface frames with the time interval, respectively. The fourth determining unit 632 is configured to determine, according to the second frequency offset change values and a preset threshold, whether the frequency offset of the to-be-detected terminal is abnormal.

The fourth determining unit 632 is specifically configured to, if N frequency offset change values are greater than or equal to the threshold in a preset detection duration, determine that the frequency offset of the to-be-detected terminal is abnormal, where N is greater than or equal to 1.

For the work process and work principle of each of the modules in this embodiment, reference is made to the description in each of the method embodiments. Details are not repeated herein.

In the embodiment of the present invention, a base station controller may send detection instruction signaling to a base transceiver station to instruct the base transceiver station to scramble a downlink signal of a to-be-detected voice service channel indicated in the detection instruction signaling; then the base transceiver station performs frequency offset detection on an uplink signal of the to-be-detected voice service channel after the scrambling, to obtain a frequency offset detection result of the uplink signal of the to-be-detected voice service channel when the downlink signal of the to-be-detected voice service channel is multiplexed; and the base station controller receives the frequency offset detection result sent by the base transceiver station to acquire whether frequency offset is abnormal when the to-be-detected terminal applies a VAMOS technology. With the method provided in the embodiment of the present invention, a terminal on which an abnormality may occur during VAMOS multiplexing may be quickly and accurately identified, and impact on normal voice service quality of the terminal is small.

An embodiment of the present invention further provides a system for detecting terminal frequency offset, including any one of the base transceiver stations according to the embodiments of the present invention and any one of the base station controllers according to the embodiments of the present invention.

For the work process and work principle of the base transceiver station and the base station controller in this embodiment, reference is made to the description in each of the method embodiments. Details are not repeated herein.

For the advantages of the embodiments of the present invention, reference is made to the specific description of the preceding embodiments. Details are not repeated herein.

## Claims

1. A method for detecting terminal frequency offset at a base transceiver station, comprising:
modulating, by using an adaptive quadrature phase shift keying modulation technology, a downlink signal of a to-be-detected voice service channel corresponding to a to-be-detected terminal (302);
performing frequency offset detection on an uplink signal on the to-be-detected voice service channel after the modulating, to obtain a frequency offset detection result of the uplink signal of the to-be-detected voice service channel (303); and
sending the frequency offset detection result to a base station controller (304);
wherein the performing frequency offset detection on an uplink signal on the to-be-detected voice service channel comprises:
detecting a plurality of frequency offset values of the uplink signal through uplink automatic frequency correction;
acquiring a frequency offset change value according to detected frequency offset values, wherein the frequency offset change value is equal to a difference between a first frequency offset value and a second frequency offset value; and
determining, according to the frequency offset change value and a preset threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal.

2. A method for detecting terminal frequency offset at a base station controller comprising:
receiving a frequency offset detection result that is sent by a base transceiver station (305) and obtained after the base transceiver station detects a plurality of frequency offset values on an uplink signal on a to-be-detected voice service channel after modulating wherein the to-be-detected voice service channel is a voice service channel corresponding to a to-be-detected terminal; acquiring a frequency offset change value according to detected frequency offset values, wherein the frequency offset change value is equal to a difference between a first frequency offset value and a second frequency offset value; and
determining, according to the frequency offset change value and a preset threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal (306), adding a result about whether the frequency offset of the to-be-detected terminal is abnormal and a device type identifier of the to-be-detected terminal to a frequency offset detection database.

3. The method for detecting terminal frequency offset according to claim 1 or 2, wherein detecting a plurality of frequency offset values comprises periodically detecting a frequency offset value of the uplink signal through uplink automatic frequency correction; and wherein acquiring a frequency offset change value comprises acquiring a first frequency offset change value in each detection period according to detected frequency offset values of the uplink signal, wherein the first frequency offset change value in each detection period is equal to a difference between a frequency offset value corresponding to the end of the detection period and a frequency offset value corresponding to the start of the detection period.

4. The method for detecting terminal frequency offset according to claim 1 or 2 wherein detecting a plurality of frequency offset values comprises detecting frequency offset values of air interface frames of the uplink signal through uplink automatic frequency correction; and wherein acquiring a frequency offset change value comprises acquiring a second frequency offset change value between any two air interface frames with a time interval according to the frequency offset values of the air interface frames, wherein the second frequency offset change value is a difference between two frequency offset values and the two frequency offset values are corresponding to two air interface frames with the time interval, respectively, wherein the frequency offset detection result is the second frequency offset change values

5. The method for detecting terminal frequency offset according to claim 2, further comprising:
sending first signaling sent to the base transceiver station, wherein the first signaling comprises an information element used to instruct the base transceiver station to perform frequency offset detection for the to-be-detected voice service channel.

6. A base transceiver station, comprising:
a scrambling module, configured to modulate, by using an adaptive quadrature phase shift keying modulation technology, a downlink signal of a to-be-detected voice service channel corresponding to a to-be-detected terminal;
a detection module, configured to perform frequency offset detection on an uplink signal on the to-be-detected voice service channel after the modulating performed by the scrambling module, to obtain a frequency offset detection result of the uplink signal of the to-be-detected voice service channel; and
a first sending module, configured to send the frequency offset detection result obtained by the detection module to a base station controller;
wherein the detection module comprises:
a detection unit configured to detect a plurality of frequency offset values of the uplink signal through uplink automatic frequency correction;
an acquiring unit configured to acquire a frequency offset change value according to detected frequency offset values, wherein the frequency offset change value is equal to a difference between a first frequency offset value and a second frequency offset value;
a determining unit configured to determine, according to the frequency offset change value and a preset threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal.

7. A base station controller, comprising:
a second receiving module, configured to receive a frequency offset detection result that is sent by a base transceiver station and obtained after a determining unit of the base transceiver station performs frequency offset detection on an uplink signal on a to-be-detected voice service channel after modulating, wherein the to-be-detected voice service channel is a voice service channel corresponding to a to-be-detected terminal;
an acquiring unit acquiring a frequency offset change value according to detected frequency offset values, wherein the frequency offset change value is equal to a difference between a first frequency offset value and a second frequency offset value; and a determining unit determining, according to the frequency offset change value and a preset threshold, whether the frequency offset of the to-be-detected terminal is abnormal, wherein the frequency offset of the to-be-detected terminal is abnormal if a pre-determined number of frequency offset change values are greater than or equal to the threshold; wherein the frequency offset detection result is whether the frequency offset of the to-be-detected terminal is abnormal, an adding module, configured to add a result about whether the frequency offset of the to-be-detected terminal is abnormal and a device type identifier of the to-be-detected terminal to a frequency offset detection database.

8. The base transceiver station according to claim 6, further comprising:
a first receiving module, configured to receive first signaling sent by the base station controller, wherein the first signaling comprises an information element used to instruct to perform frequency offset detection for the to-be-detected voice service channel.

9. The base transceiver station according to claim 6, wherein
the detection unit is, configured to periodically detect a frequency offset value of the uplink signal through uplink automatic frequency correction; and the first acquiring unit is configured to acquire a first frequency offset change value in each detection period according to frequency offset values of the uplink signal that are detected by the first detection unit, wherein the first frequency offset change value in each detection period is equal to a difference between a frequency offset value corresponding to the end of the detection period and a frequency offset value corresponding to the start of the detection period.

10. The base transceiver station according to claim 6, wherein:
the detection module comprises:
the detection unit is configured to detect frequency offset values of air interface frames of the uplink signal through uplink automatic frequency correction; and the acquiring unit is configured to acquire a second frequency offset change value between any two air interface frames with a time interval according to the frequency offset values of the air interface frames detected by the second detection unit, wherein the second frequency offset change value is a difference between two frequency offset values, and the two frequency offset values are corresponding to two air interface frames with the time interval, respectively

11. The base station controller according to claim 7, further comprising:
a second sending module, configured to send first signaling to the base transceiver station, wherein the first signaling comprises an information element used to instruct the base transceiver station to perform frequency offset detection for the to-be-detected voice service channel.

## Patentansprüche

1. Verfahren zum Detektieren von Endgerätefrequenzversatz in einer Basis-Sender-/Empfängerstation, das Folgendes umfasst:
Modulieren, durch Verwenden einer adaptiven Quadratur-Phasenumtastung-Modulationstechnologie, eines Abwärtsstreckensignals eines zu detektierenden Sprachdienstkanals, der einem zu detektierenden Endgerät (302) entspricht;
Ausführen von Frequenzversatzdetektion auf einem Aufwärtsstreckensignal auf dem zu detektierenden Sprachdienstkanal nach dem Modulieren, um ein Frequenzversatzdetektionsergebnis des Aufwärtsstreckensignals des zu detektierenden Sprachdienstkanals (303) zu erhalten; und
Senden des Frequenzversatzdetektionsergebnisses zu einer Basisstationssteuereinheit (304);
wobei das Ausführen der Frequenzversatzdetektion auf einem Aufwärtsstreckensignal auf dem zu detektierenden Sprachdienstkanal Folgendes umfasst:
Detektieren von mehreren Frequenzversatzwerten des Aufwärtsstreckensignals durch automatische Aufwärtsstreckenfrequenzkorrektur;
Erfassen eines Frequenzversatzänderungswerts gemäß den detektierten Frequenzversatzwerten, wobei der Frequenzversatzänderungswert gleich einer Differenz zwischen einem ersten Frequenzversatzwert und einem zweiten Frequenzversatzwert ist; und
Bestimmen gemäß dem Frequenzversatzänderungswert und einem voreingestellten Schwellenwert, ob der Frequenzversatz des zu detektierenden Endgeräts anormal ist, wobei der Frequenzversatz des zu detektierenden Endgeräts anormal ist, falls eine vorbestimmte Anzahl von Frequenzversatzänderungswerten größer oder gleich dem Schwellenwert sind; wobei das Frequenzversatzdetektionsergebnis ist, ob der Frequenzversatz des zu detektierenden Endgeräts anormal ist.

2. Verfahren zum Detektieren von Endgerätefrequenzversatz in einer Basisstationssteuereinheit, das Folgendes umfasst:
Empfangen eines Frequenzversatzdetektionsergebnisses, das durch eine Basis-Sender-/Empfängerstation (305) gesendet wird und erhalten wird, nachdem die Basis-Sender-/Empfängerstation mehrere Frequenzversatzwerte auf einem Aufwärtsstreckensignal auf einem zu detektierenden Sprachdienstkanal nach Modulieren detektiert, wobei der zu detektierende Sprachdienstkanal ein Sprachdienstkanal ist, der einem zu detektierenden Endgerät entspricht; Erfassen eines Frequenzversatzänderungswerts gemäß den detektierten Frequenzversatzwerten, wobei der Frequenzversatzänderungswert gleich einer Differenz zwischen einem ersten Frequenzversatzwert und einem zweiten Frequenzversatzwert ist; und
Bestimmen gemäß dem Frequenzversatzänderungswert und einem voreingestellten Schwellenwert, ob der Frequenzversatz des zu detektierenden Endgeräts anormal ist, wobei der Frequenzversatz des zu detektierenden Endgeräts anormal ist, falls eine vorbestimmte Anzahl von Frequenzversatzänderungswerten größer oder gleich dem Schwellenwert sind; wobei das Frequenzversatzdetektionsergebnis ist, ob der Frequenzversatz des zu detektierenden Endgeräts anormal ist (306), Hinzufügen eines Ergebnisses darüber, ob der Frequenzversatz des zu detektierenden Endgeräts anormal ist, und eines Vorrichtungstypbezeichners des zu detektierenden Endgeräts zu einer Frequenzversatzdetektionsdatenbank.

3. Verfahren zum Detektieren von Endgerätefrequenzversatz nach Anspruch 1 oder 2, wobei das Detektieren von mehreren Frequenzversatzwerten periodisches Detektieren eines Frequenzversatzwerts des Aufwärtsstreckensignals durch automatische Aufwärtsstreckenfrequenzkorrektur umfasst; und wobei das Erfassen eines Frequenzversatzänderungswerts das Erfassen eines ersten Frequenzversatzänderungswerts in jeder Detektionsperiode gemäß detektierten Frequenzversatzänderungswerten des Aufwärtsstreckensignals umfasst, wobei der erste Frequenzversatzänderungswert in jeder Detektionsperiode gleich einer Differenz zwischen einem Frequenzversatzänderungswert, der dem Ende der Detektionsperiode entspricht, und einem Frequenzversatzänderungswert, der dem Start der Detektionsperiode entspricht, ist.

4. Verfahren zum Detektieren von Endgerätefrequenzversatz nach Anspruch 1 oder 2, wobei das Detektieren von mehreren Frequenzversatzwerten das Detektieren von Frequenzversatzwerten von Luftschnittstellenrahmen des Aufwärtsstreckensignals durch automatische Aufwärtsstreckenfrequenzkorrektur umfasst; und wobei das Erfassen eines Frequenzversatzänderungswerts das Erfassen eines zweiten Frequenzversatzänderungswerts zwischen irgendwelchen zwei Luftschnittstellenrahmen mit einem Zeitintervall gemäß den Frequenzversatzwerten der Luftschnittstellenrahmen entspricht, wobei der zweite Frequenzversatzänderungswert eine Differenz zwischen zwei Frequenzversatzwerten ist und die zwei Frequenzversatzwerte jeweils zwei Luftschnittstellenrahmen mit dem Zeitintervall entsprechen, wobei das Frequenzversatzdetektionsergebnis der zweite Frequenzversatzänderungswert ist.

5. Verfahren zum Detektieren von Endgerätefrequenzversatz nach Anspruch 2, das ferner Folgendes umfasst:
Senden erster Signalisierung, die zu der Basis-Sender/Empfängerstation gesendet wird, wobei die erste Signalisierung ein Informationselement umfasst, das verwendet wird, um die Basis-Sender/Empfängerstation anzuweisen, Frequenzversatzdetektion für den zu detektierenden Sprachdienstkanal auszuführen.

6. Basis-Sender-/Empfängerstation, die Folgendes umfasst:
ein Verwürfelungsmodul, das konfiguriert ist, durch Verwenden einer adaptiven Quadratur-Phasenumtastung-Modulationstechnologie, ein Abwärtsstreckensignal eines zu detektierenden Sprachdienstkanals, der einem zu detektierenden Endgerät entspricht, zu modulieren;
ein Detektionsmodul, das konfiguriert ist, Frequenzversatzdetektion auf einem Aufwärtsstreckensignal auf dem zu detektierenden Sprachdienstkanal nach der Modulierung, die durch das Verwürfelungsmodul ausgeführt wird, auszuführen, um ein Frequenzversatzdetektionsergebnis des Aufwärtsstreckensignals des zu detektierenden Sprachdienstkanals zu erhalten; und
ein erstes Sendemodul, das konfiguriert ist, das Frequenzversatzdetektionsergebnis, das durch das Detektionsmodul erhalten wird, zu einer Basisstationssteuereinheit zu senden;
wobei das Detektionsmodul Folgendes umfasst:
eine Detektionseinheit, die konfiguriert ist, mehrere Frequenzversatzwerte des Aufwärtsstreckensignals durch automatische Aufwärtsstreckenfrequenzkorrektur zu detektieren;
eine Erfassungseinheit, die konfiguriert ist, einen Frequenzversatzänderungswert gemäß den detektierten Frequenzversatzwerten zu erfassen, wobei der Frequenzversatzänderungswert gleich einer Differenz zwischen einem ersten Frequenzversatzwert und einem zweiten Frequenzversatzwert ist;
eine Bestimmungseinheit, die konfiguriert ist, gemäß dem Frequenzversatzänderungswert und einem voreingestellten Schwellenwert zu bestimmen, ob der Frequenzversatz des zu detektierenden Endgeräts anormal ist, wobei der Frequenzversatz des zu detektierenden Endgeräts anormal ist, falls eine vorbestimmte Anzahl von Frequenzversatzänderungswerten größer oder gleich dem Schwellenwert sind; wobei das Frequenzversatzdetektionsergebnis ist, ob der Frequenzversatz des zu detektierenden Endgeräts anormal ist.

7. Basisstationssteuereinheit, die Folgendes umfasst:
ein zweites Empfangsmodul, das konfiguriert ist, ein Frequenzversatzdetektionsergebnis zu empfangen, das durch eine Basis-Sender-/Empfängerstation gesendet wird und das erhalten wird, nachdem eine Bestimmungseinheit der Basis-Sender-/Empfängerstation Frequenzversatzdetektion auf einem Aufwärtsstreckensignal auf einem zu detektierenden Sprachdienstkanal nach Modulieren ausführt, wobei der zu detektierende Sprachdienstkanal ein Sprachdienstkanal ist, der einem zu detektierenden Endgerät entspricht;
eine Erfassungseinheit, die einen Frequenzversatzänderungswert gemäß den detektierten Frequenzversatzwerten erfasst, wobei der Frequenzversatzänderungswert gleich einer Differenz zwischen einem ersten Frequenzversatzwert und einem zweiten Frequenzversatzwert ist; und eine Bestimmungseinheit, die gemäß dem Frequenzversatzänderungswert und einem voreingestellten Schwellenwert bestimmt, ob der Frequenzversatz des zu detektierenden Endgeräts anormal ist, wobei der Frequenzversatz des zu detektierenden Endgeräts anormal ist, falls eine vorbestimmte Anzahl von Frequenzversatzänderungswerten größer oder gleich dem Schwellenwert sind; wobei das Frequenzversatzdetektionsergebnis ist, ob der Frequenzversatz des zu detektierenden Endgeräts anormal ist, ein Hinzufügungsmodul, das konfiguriert ist, ein Ergebnis darüber, ob der Frequenzversatz des zu detektierenden Endgeräts anormal ist, und einen Vorrichtungstypbezeichner des zu detektierenden Endgeräts einer Frequenzversatzdetektionsdatenbank hinzuzufügen.

8. Basis-Sender-/Empfängerstation nach Anspruch 6, die ferner Folgendes umfasst:
ein erstes Empfangsmodul, das konfiguriert ist, erste Signalisierung, die durch die Basisstationssteuereinheit gesendet wird, zu empfangen, wobei die erste Signalisierung ein Informationselement umfasst, das verwendet wird, um anzuweisen, Frequenzversatzdetektion für den zu detektierenden Sprachdienstkanal auszuführen.

9. Basis-Sender-/Empfängerstation nach Anspruch 6, wobei
die Detektionseinheit konfiguriert ist, periodisch einen Frequenzversatzwert des Aufwärtsstreckensignals durch automatische Aufwärtsstreckenfrequenzkorrektur zu detektieren; und die erste Erfassungseinheit konfiguriert ist, einen ersten Frequenzversatzänderungswert in jeder Detektionsperiode gemäß Frequenzversatzwerten des Aufwärtsstreckensignals, die durch die erste Detektionseinheit detektiert werden, zu erfassen, wobei der erste Frequenzversatzänderungswert in jeder Detektionsperiode gleich einer Differenz zwischen einem Frequenzversatzwert, der dem Ende der Detektionsperiode entspricht, und einem Frequenzversatzwert, der dem Start der Detektionsperiode entspricht, ist.

10. Basis-Sender-/Empfängerstation nach Anspruch 6, wobei:
das Detektionsmodul Folgendes umfasst:
die Detektionseinheit, die konfiguriert ist, Frequenzversatzwerte von Luftschnittstellenrahmen des Aufwärtsstreckensignals durch automatische Aufwärtsstreckenfrequenzkorrektur zu detektieren; und die Erfassungseinheit, die konfiguriert ist, einen zweiten Frequenzversatzänderungswert zwischen irgendwelchen zwei Luftschnittstellenrahmen mit einem Zeitintervall gemäß den Frequenzversatzwerten der Luftschnittstellenrahmen, die durch die zweite Detektionseinheit detektiert werden, zu erfassen, wobei der zweite Frequenzversatzänderungswert eine Differenz zwischen zwei Frequenzversatzwerten ist und die zwei Frequenzversatzwerte zwei jeweiligen Luftschnittstellenrahmen mit dem Zeitintervall entsprechen.

11. Basisstationssteuereinheit nach Anspruch 7, die ferner Folgendes umfasst:
ein zweites Sendemodul, das konfiguriert ist, erste Signalisierung zu der Basis-Sender-/Empfängerstation zu senden, wobei die erste Signalisierung ein Informationselement umfasst, das verwendet wird, um die Basis-Sender-/Empfängerstation anzuweisen, Frequenzversatzdetektion für den zu detektierenden Sprachdienstkanal auszuführen.

## Revendications

1. Procédé pour détecter un décalage de fréquence de terminal au niveau d'une station d'émetteur-récepteur de base comprenant les étapes suivantes :
moduler, au moyen d'une technologie de modulation par déplacement de phase en quadrature adaptative, un signal de liaison descendante d'un canal de service vocal à détecter correspondant à un terminal à détecter (302) ;
exécuter une détection de décalage de fréquence sur un signal de liaison montante sur le canal de service vocal à détecter après la modulation, pour obtenir un résultat de détection de décalage de fréquence du signal de liaison montante du canal de service vocal à détecter (303) ; et
envoyer le résultat de détection de décalage de fréquence à un contrôleur de station de base (304) ;
où l'exécution d'une détection de décalage de fréquence sur un signal de liaison montante sur le canal de service vocal à détecter comprend les étapes suivantes :
détecter une pluralité de valeurs de décalage de fréquence du signal de liaison montante par l'intermédiaire d'une correction de fréquence automatique de liaison montante ;
acquérir une valeur de changement de décalage de fréquence conformément à des valeurs de décalage de fréquence détectées, où la valeur de changement de décalage de fréquence est égale à une différence entre une première valeur de décalage de fréquence et une seconde valeur de décalage de fréquence ; et
déterminer, conformément à la valeur de changement de décalage de fréquence et à un seuil prédéfini, si le décalage de fréquence du terminal à détecter est anormal, où le décalage de fréquence du terminal à détecter est anormal si un nombre prédéterminé de valeurs de changement de décalage de fréquence est supérieur ou égal au seuil ; où le résultat de détection de décalage de fréquence indique si le décalage de fréquence du terminal à détecter est anormal.

2. Procédé pour détecter un décalage de fréquence de terminal au niveau d'un contrôleur de station de base, comprenant les étapes suivantes :
recevoir un résultat de détection de décalage de fréquence qui est envoyé par une station d'émetteur-récepteur de base (305) et obtenu après que la station d'émetteur-récepteur de base a détecté une pluralité de valeurs de décalage de fréquence sur un signal de liaison montante sur un canal de service vocal à détecter après une modulation, où le canal de service vocal à détecter est un canal de service vocal correspondant à un terminal à détecter ; acquérir une valeur de changement de décalage de fréquence conformément aux valeurs de décalage de fréquence détectées, où la valeur de changement de décalage de fréquence est égale à une différence entre une première valeur de décalage de fréquence et une seconde valeur de décalage de fréquence ; et
déterminer, conformément à la valeur de changement de décalage de fréquence et à un seuil prédéfini, si le décalage de fréquence du terminal à détecter est anormal, où le décalage de fréquence du terminal à détecter est anormal si un nombre prédéterminé de valeurs de changement de décalage de fréquence est supérieur ou égal au seuil ; où le résultat de détection de décalage de fréquence indique si le décalage de fréquence du terminal à détecter est anormal (306) ; ajouter un résultat indiquant si le décalage de fréquence du terminal à détecter est anormal et un identificateur de type de dispositif du terminal à détecter à une base de données de détection de décalage de fréquence.

3. Procédé pour détecter un décalage de fréquence de terminal selon la revendication 1 ou la revendication 2, dans lequel détecter une pluralité de valeurs de décalage de fréquence comprend de détecter, périodiquement, une valeur de décalage de fréquence du signal de liaison montante par l'intermédiaire d'une correction de fréquence automatique de liaison montante ; et où acquérir une valeur de changement de décalage de fréquence comprend d'acquérir une première valeur de changement de décalage de fréquence dans chaque période de détection conformément à des valeurs de décalage de fréquence détectées du signal de liaison montante, où la première valeur de changement de décalage de fréquence dans chaque période de détection est égale à une différence entre une valeur de décalage de fréquence correspondant à la fin de la période de détection et une valeur de décalage de fréquence correspondant au début de la période de détection.

4. Procédé pour détecter un décalage de fréquence de terminal selon la revendication 1 ou la revendication 2, dans lequel détecter une pluralité de valeurs de décalage de fréquence comprend de détecter des valeurs de décalage de fréquence de trames d'interface radio du signal de liaison montante par l'intermédiaire d'une correction de fréquence automatique de liaison montante ; et où acquérir une valeur de changement de décalage de fréquence comprend d'acquérir une seconde valeur de changement de décalage de fréquence entre deux trames d'interface radio quelconques avec un intervalle de temps conformément aux valeurs de décalage de fréquence des trames d'interface radio, où la seconde valeur de changement de décalage de fréquence est une différence entre deux valeurs de décalage de fréquence et les deux valeurs de décalage de fréquence correspondent, respectivement, à deux trames d'interface radio avec l'intervalle de temps, où le résultat de détection de décalage de fréquence correspond aux secondes valeurs de changement de décalage de fréquence.

5. Procédé pour détecter un décalage de fréquence de terminal selon la revendication 2, comprenant en outre l'étape suivante :
envoyer une première signalisation envoyée à la station d'émetteur-récepteur de base, où la première signalisation comprend un élément d'information utilisé pour donner instruction à la station d'émetteur-récepteur de base d'exécuter une détection de décalage de fréquence pour le canal de service vocal à détecter.

6. Station d'émetteur-récepteur de base, comprenant :
un module de brouillage, configuré pour moduler, au moyen d'une technologie de modulation par déplacement de phase en quadrature adaptive, un signal en liaison descendante d'un canal de service vocal à détecter correspondant à un terminal à détecter ;
un module de détection, configuré pour exécuter une détection de décalage de fréquence sur un signal de liaison montante sur le canal de service vocal à détecter après la modulation exécutée par le module de brouillage, pour obtenir un résultat de détection de décalage de fréquence du signal de liaison montante du canal de service vocal à détecter ; et
un premier module d'envoi, configuré pour envoyer le résultat de détection de décalage de fréquence obtenu par le module de détection à un contrôleur de station de base ;
où le module de détection comprend :
une unité de détection configurée pour détecter une pluralité de valeurs de décalage de fréquence du signal de liaison montante par l'intermédiaire d'une correction de fréquence automatique de liaison montante ;
une unité d'acquisition configurée pour acquérir une valeur de changement de décalage de fréquence conformément aux valeurs de décalage de fréquence détectées, où la valeur de changement de décalage de fréquence est égale à une différence entre une première valeur de décalage de fréquence et une seconde valeur de décalage de fréquence ;
une unité de détermination configurée pour déterminer, conformément à la valeur de changement de décalage de fréquence et à un seuil prédéfini, si le décalage de fréquence du terminal à détecter est anormal, où le décalage de fréquence du terminal à détecter est anormal si un nombre prédéterminé de valeurs de changement de décalage de fréquence est supérieur ou égal au seuil ; où le résultat de détection de décalage de fréquence indique si le décalage de fréquence du terminal à détecter est anormal.

7. Contrôleur de station de base, comprenant :
un seconde module de réception, configuré pour recevoir un résultat de détection de décalage de fréquence qui est envoyé par une station d'émetteur-récepteur de base et obtenu après qu'une unité de détermination de la station d'émetteur-récepteur de base a exécuté une détection de décalage de fréquence sur un signal de liaison montante sur un canal de service vocal à détecter après une modulation, où le canal de service vocal à détecter est un canal de service vocal correspondant à un terminal à détecter ;
une unité d'acquisition acquérant une valeur de changement de décalage de fréquence conformément à des valeurs de décalage de fréquence détectées, où la valeur de changement de décalage de fréquence est égale à une différence entre une première valeur de décalage de fréquence et une seconde valeur de décalage de fréquence ; et une unité de détermination déterminant, conformément à la valeur de changement de décalage de fréquence et à un seuil prédéfini, si le décalage de fréquence du terminal à détecter est anormal, où le décalage de fréquence du terminal à détecter est anormal si un nombre prédéterminé de valeurs de changement de décalage de fréquence est supérieur ou égal au seuil ; où le résultat de détection de décalage de fréquence indique si le décalage de fréquence du terminal à détecter est anormal,
un module d'ajout, configuré pour ajouter un résultat indiquant si le décalage de fréquence du terminal à détecter est anormal et un identificateur de type de dispositif du terminal à détecter à une base de données de détection de décalage de fréquence.

8. Station d'émetteur-récepteur de base selon la revendication 6, comprenant en outre :
un premier module de réception, configuré pour recevoir une première signalisation envoyée par le contrôleur de station de base, où la première signalisation comprend un élément d'information utilisé pour donner instruction d'exécuter une détection de décalage de fréquence pour le canal de service vocal à détecter.

9. Station d'émetteur-récepteur de base selon la revendication 6, dans lequel :
l'unité de détection est configurée pour, périodiquement, détecter une valeur de décalage de fréquence du signal de liaison montante par l'intermédiaire d'une correction de fréquence automatique de liaison montante ; et la première unité d'acquisition est configurée pour acquérir une première valeur de changement de décalage de fréquence dans chaque période de détection conformément à des valeurs de décalage de fréquence du signal de liaison montante qui sont détectées par la première unité de détection, où la première valeur de changement de décalage de fréquence dans chaque période de détection est égale à une différence entre une valeur de décalage de fréquence correspondant à la fin de la période de détection et une valeur de décalage de fréquence correspondant au début de la période de détection.

10. Station d'émetteur-récepteur de base selon la revendication 6, dans lequel :
le module de détection comprend :
l'unité de détection configurée pour détecter des valeurs de décalage de fréquence de trames d'interface radio du signal de liaison montante par l'intermédiaire d'une correction de fréquence automatique de liaison montante ; et l'unité d'acquisition configurée pour acquérir une seconde valeur de changement de décalage de fréquence entre deux trames d'interface radio quelconques avec un intervalle de temps conformément aux valeurs de décalage de fréquence des trames d'interface radio détectées par la seconde unité de détection, où la seconde valeur de changement de décalage de fréquence est une différence entre deux valeurs de décalage de fréquence, et les deux valeurs de décalage de fréquence correspondent, respectivement, à deux trames d'interface radio avec l'intervalle de temps.

11. Contrôleur de station de base selon la revendication 7, comprenant en outre :
un second module d'envoi, configuré pour envoyer une première signalisation à la station d'émetteur-récepteur de base, où la première signalisation comprend un élément d'information utilisé pour donner instruction à la station d'émetteur-récepteur de base d'exécuter une détection de décalage de fréquence pour le canal de service vocal à détecter.
